# EUROPÄISCHE PATENTANMELDUNG

(11) **EP 1 030 280 A2**
(43) Veröffentlichungstag der Anmeldung: **23.08.2000**
(21) Anmeldenummer: 00102605.3
(22) Anmeldetag: 08.02.2000
(51) Int. Cl.: G08G 1/0968

(54) **Navigationsverfahren und Navigationssystem für ein Fortbewegungsmittel**

(30) Priorität: 20.02.1999 DE 19907418
(71) Anmelder: ROBERT BOSCH GMBH, 70442 Stuttgart (DE)
(72) Erfinder: Rychlak, Stefan, 31241 Ilsede (DE)

(57) **Zusammenfassung**

Die vorliegende Erfindung betrifft ein Navigationsverfahren und ein Navigationssystem für ein Fortbewegungsmittel, insbesondere für ein Fahrzeug, Kraftfahrzeug, Schiff oder Flugzeug, zur Navigation von einem Ausgangsort zu einem Zielort, wobei eine Route von dem Ausgangsort zu dem Zielort bestimmt und das Fortbewegungsmittel bzw. dessen Benutzer entlang dieser Route geführt wird. Hierbei wird wahlweise eine vorbestimmte Anzahl von vorbestimmten Umleitungen, welche in Fortbewegungsrichtung auf der berechneten Route voraus liegen, angezeigt, wobei wenigstens eine dieser Umleitungen zur Integration in die Route auswählbar ist.

## Beschreibung

### Technisches Gebiet

Die Erfindung betrifft ein Navigationsverfahren für ein Fortbewegungsmittel, insbesondere für ein Fahrzeug, Kraftfahrzeug, Schiff oder Flugzeug, zur Navigation von einem Ausgangsort zu einem Zielort, wobei eine Route von dem Ausgangsort zu dem Zielort bestimmt und das Fortbewegungsmittel bzw. dessen Benutzer entlang dieser Route geführt wird, gemäß dem Oberbegriff des Anspruchs 1. Die Erfindung betrifft ferner ein Navigationssystem für ein Fortbewegungsmittel, insbesondere für ein Fahrzeug, Kraftfahrzeug, Schiff oder Flugzeug, zur Navigation von einem Ausgangsort zu einem Zielort, welches eine Route von dem Ausgangsort zu dem Zielort bestimmt und das Fortbewegungsmittel bzw. dessen Benutzer entlang dieser Route führt, gemäß dem Oberbegriff des Anspruchs 4.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher von einem aktuellen Standort zu einem gewünschten Zielort, ohne dass der Führer des Fortbewegungsmittels vorher aufwendig eine Route planen und entsprechendes Kartenmaterial erwerben muss. Hierzu liegen entsprechende, beispielsweise auf Karten, Landkarten oder Straßenkarten basierende, Navigationsdaten in dem Navigationssystem beispielsweise auf CD-ROM gespeichert vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen.

Beispielsweise auf Autobahnen gibt es vorbestimmte Umleitungen, welche mit U1, U2, U3, usw. bezeichnet sind, welche es einem auf Sicht navigierenden Kraftfahrer ermöglichen, ohne besondere Ortskenntnis eine Umleitungsstrecke zu wählen, um beispielsweise einen Stau zu umfahren. Hierbei folgt der Fahrer der Ausschilderung der entsprechenden Umleitung. Diese vorbestimmten Umleitungsstrecken werden häufig in Verkehrsmeldungen genannt, um einem Kraftfahrer, auf dessen Weg eine Verkehrsstörung gemeldet wird, schnell und einfach eine alternative Fahrstrecke zum Umfahren der Verkehrsstörung mitzuteilen.

Wenn jedoch der Fahrer des Kraftfahrzeuges mittels eines Navigationssystems navigiert, so kann dieser nicht einfach einer derartig ausgeschilderten Umleitung folgen, da das Navigationssystem ständig bestrebt wäre, ihn wieder auf die ursprünglich berechnete Route zurück zu führen. Da diese Route jedoch ggf. zu einer Verkehrsstörung, wie beispielsweise einem Stau oder einer Straßensperre, führt, hat der Fahrer nun die alternative sich entweder durch einen ggf. vorhandenen Stau zu quälen oder anzuhalten und sein Navigationssystem auf die Umleitungsroute zu programmieren. Da letzteres ggf. sehr umständlich sowie zeitaufwendig ist und ferner ein Benutzer eines Navigationssystems in der Regel eine Fahrtunterbrechung zur Eingabe von Daten in das Navigationasystem nicht akzeptiert, wird häufig auf die Navigation durch das Navigationssystem vollständig verzichtet. Dies ist jedoch unbefriedigend und unkomfortabel.

### Darstellung der Erfindung, Aufgabe, Lösung, Vorteile

Es ist Aufgabe der vorliegenden Erfindung, ein verbessertes Navigationsverfahren sowie Navigationssystem der obengenannten Art zur Verfügung zu stellen, weiche die obengenannten Nachteile beseitigen.

Diese Aufgabe wird durch ein Navigationsverfahren der o.g. Art mit den in Anspruch 1 gekennzeichneten Merkmalen und durch ein Navigationssystem der o.g. Art mit den in Anspruch 4 gekennzeichneten Merkmalen gelöst.

Dazu ist es bei einem Navigationsverfahren der o.g. Art erfindungsgemäß vorgesehen, dass wahlweise eine vorbestimmte Anzahl von vorbestimmten Umleitungen, welche in Fortbewegungsrichtung auf der berechneten Route voraus liegen, angezeigt wird, wobei wenigstens eine dieser Umleitungen zur Integration in die Route auswählbar ist.

Dies hat den Vorteil, dass Umleitungen aufgrund von Verkehrsstörungen einfach, schnell und zuverlässig in die berechnete Route integrierbar sind. Diese neue Funktion trägt zur Verkehrssicherheit bei, wobei eine Verkehrsstörung, wie beispielsweise ein gemeldeter Stau, weiträumig und rechtzeitig umfahren werden kann. Auch aus Gründen des Umweltschutzes ist dies vorteilhaft, da weniger Autos in einem Stau zu entsprechend weniger zusätzlichem Abgas von im Stand laufenden Motoren führen. Ein Aufbau eines Staus wird zusätzlich reduziert, da mehr Fahrzeuge an diesem vorbei geleitet werden.

Vorzugsweise Weitergestaltungen des Navigationsverfahrens sind in den Ansprüchen 2 und 3 beschrieben.

Beispielsweise sind die vorbestimmten Umleitungen entlang von Autobahnen ausgeschilderte Umleitungen oder Umleitungen, die über Rundfunk, Fernsehen oder Telekommunikationsmedien angezeigt oder als Information geliefert werden. Es werden beispielsweise fünf bis fünfzehn, insbesondere zehn, vorbestimmte Umleitungen zur Auswahl angezeigt.

Ferner ist bei einem Navigationsverfahren der o.g. Art erfindungsgemäß folgendes vorgesehen, ein Speicher für vorbestimmte Umleitungen, eine Anzeigevorrichtung für vorbestimmte Umleitungen, ein erstes manuelles Betätigungsmittel, nach dessen Betätigung das Navigationssystem eine vorbestimmte Anzahl der vorbestimmten Umleitungen, welche in Fortbewegungsrichtung auf der berechneten Route voraus liegen, bestimmt und auf der Anzeigevorrichtung anzeigt, und ein zweites manuelles Betätigungsmittel, nach dessen Betätigung das Navigationssystem wenigstens eine der angezeigten vorbestimmten Umleitungen in die berechnete Route integriert.

Vorzugsweise Weitergestaltungen des Navigationssystems sind in den Ansprüchen 5 und 6 beschrieben.

So umfasst das Navigationssystem beispielsweise ein Autoradio mit CD-Laufwerk, wobei der Speicher für vorbestimmte Umleitungen auf einer in dem CD-Laufwerk befindlichen Navigations-CD ausgebildet ist.

Zweckmäßigerweise umfasst das erste und/oder zweite Betätigungsmittel eine Zehnertastatur.

### Kurze Beschreibung der Zeichnungen

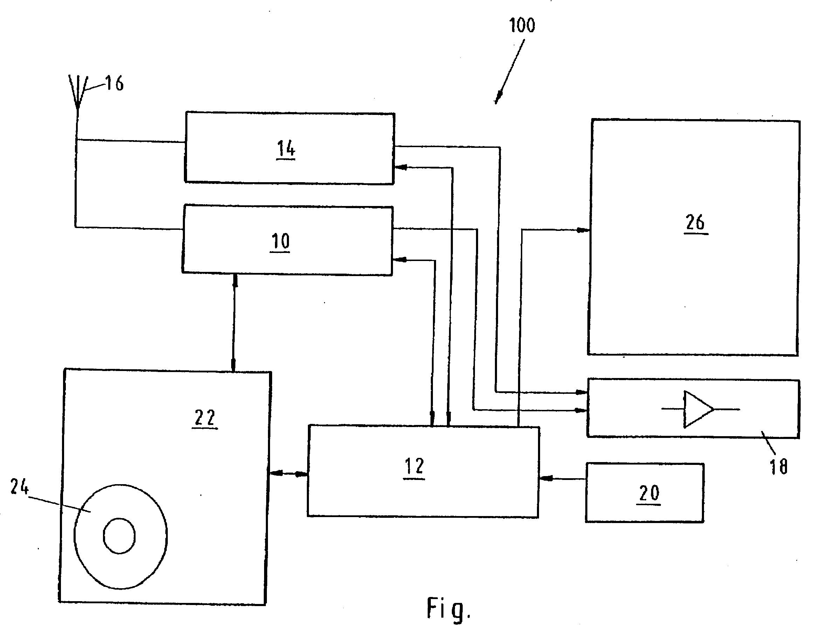

Nachstehend wird die Erfindung anhand der beigefügten Zeichnung näher erläutert. Diese zeigt in der einzigen Fig. eine bevorzugte Ausführungsform eines erfindungsgemäßen Navigationssystems.

### Bester Weg zur Ausführung der Erfindung

Die in der einzigen Figur dargestellte bevorzugte Ausführungsform eines erfindungsgemäßen Navigationssystems 100 umfasst ein Navigationsgerät 10 mit einem Navigationsprozessor 12 und einen Rundfunkempfänger 14. Bei Einbau des erfindungsgemäßen Navigationssystems 100 in ein Kraftfahrzeug ist der Rundfunkempfänger 14 beispielsweise ein Autoradio. Eine Antenne 16 ist sowohl mit dem Rundfunkempfänger 14 als auch einem nicht dargestellten, internen GPS-Gerät (GPS = Ground Positioning System) des Navigationsgerätes 10 verbunden. Zur Ausgabe von Navigationsanweisungen ist das Navigationsgerät 10 mit einem akustischen Ausgabegerät 18 verbunden. Zur Wiedergabe von Audiosendungen ist auch der Rundfunkempfänger 14 mit dem akustischen Ausgabegerät 18 verbunden. Über eine Tastatur 20 gibt ein Benutzer Befehle bzw. Navigationsziele und ggf. einen momentanen Standort in das Navigationsgerät 10 über den Navigationsprozessor 12, welcher derartige manuelle Eingaben verarbeitet, ein. In einem CD-Laufwerk 22 ist eine Navigations-CD 24 mit einer digitalen Kartenbasis angeordnet. Ferner ist zur Anzeige von Navigationsinformationen eine Anzeigevorrichtung 26 vorgesehen und mit dem Navigationsprozessor 12 verbunden.

Auf der Navigations-CD 24 sind zusätzlich vorbestimmte Umleitungen bzw. Umleitungsstrecken gespeichert, welche beispielsweise den entlang von Autobahnen ausgeschilderten und mit U1, U2, U3 usw. bezeichneten Umleitungsstrecken entsprechen.

Möchte eine Fahrer eines mit diesem Navigationssystem 100 ausgerüsteten Kraftfahrzeuges von einem Ausgangsort, wie beispielsweise Hildesheim, zu einem Zielort, wie beispielsweise Kassel, fahren, so gibt der Fahrer Hildesheim als Ausgangsort und Kassel als Zielort über die Tastatur 20 ein. Das Navigationssystem 100 berechnet mittels der digitalen Kartenbasis auf der Navigations-CD 24 eine Route und führt den Fahrer entlang der Route, beispielsweise mittels akustischer Hinweise über das akustische Ausgabegerät 18 und/oder mittels optischer Hinweise über die Anzeigevorrichtung 26.

Im Autoradio hört nun der Fahrer eine Verkehrsmeldung, die eine Verkehrsstörung, wie beispielsweise einen Stau oder eine Straßensperrung, meldet, welche auf seiner Route vor ihm liegt. Gleichzeitig wird in der Verkehrsmeldung eine Umleitungsempfehlung über die U3 zum Umfahren der Verkehrsstörung gegeben. Der Fahrer betätigt daraufhin ein als erstes Betätigungsmittel zum Anzeigen von vorbestimmten Umleitungen bestimmte Taste auf der Tastatur 20, woraufhin das Navigationssystem 100 die nächsten in Fahrtrichtung voraus liegenden vorbestimmten Umleitungen aus den Daten der Navigations-CD 24 bestimmt und die vier nächsten von diesen auf der Anzeigevorrichtung 26 anzeigt. Der Inhalt der Anzeigevorrichtung sieht nun beispielhaft folgendermaßen aus:
- Routenstart: : Hildesheim
- Routenziel:: : Kassel
- Derzeitige Strecke: : A7 / KM 145
- Nächste Umleitung 1: : U5
- Nächste Umleitung 2: : U6
- Nächste Umleitung 3: : U10
- Nächste Umleitung 4: : U3
- Gewählte Umleitung: : _

Der Fahrer erkennt, dass die in der Verkehrsmeldung vorgeschlagene Umleitungsempfehlung, nämlich die U3, als "Nächste Umleitung 4" angeboten wird. Durch betätigen der Taste "4" als zweites manuelles Betätigungsmittel zur Auswahl einer Umleitung kann nun der Fahrer auf einfache Weise die der Umleitung U3 entsprechende Strecke auswählen, woraufhin das Navigationssystem 100 diese der U3 entsprechende Strecke mit in die Route, über die nach Kassel geführt wird, aufnimmt.

Der Inhalt der Anzeigevorrichtung ist dann:
- Routenstart: : Hildesheim
- Routenziel:: : Kassel
- Derzeitige Strecke: : A7 / KM 145
- Nächste Umleitung 1: : U5
- Nächste Umleitung 2: : U6
- Nächste Umleitung 3: : U10
- Nächste Umleitung 4: : U3
- Gewählte Umleitung: : U3

Das Navigationssystem 100 führt nun den Fahrer über die U3 an der Verkehrsstörung vorbei, ohne dass sich der Fahrer um weitere Eingaben am Navigationssystem kümmern muss.

Optional wird nach einer Betätigung des ersten Betätigungsmittel die Anzeige der nächsten Umleitungen ständig aktualisiert angezeigt, d.h. sobald das Kraftfahrzeug den Beginn der als "Nächste Umleitung 1" angezeigten Umleitung passiert hat, wird diese aus der Anzeige entfernt. Die nächsten drei Umleitungen rutschen dann nach oben als neue "Nächste Umleitung" 1 bis 3. Als neue "Nächste Umleitung 4" wird eine neue nachfolgende Umleitung angezeigt.

## Patentansprüche

1. Navigationsverfahren für ein Fortbewegungsmittel, insbesondere für ein Fahrzeug, Kraftfahrzeug; Schiff oder Flugzeug, zur Navigation von einem Ausgangsort zu einem Zielort, wobei eine Route von dem Ausgangsort zu dem Zielort bestimmt und das Fortbewegungsmittel bzw. dessen Benutzer entlang dieser Route geführt wird,
dadurch gekennzeichnet, dass
wahlweise eine vorbestimmte Anzahl von vorbestimmten Umleitungen, welche in Fortbewegungsrichtung auf der berechneten Route voraus liegen, angezeigt wird, wobei wenigstens eine dieser Umleitungen zur Integration in die Route auswählbar ist.

2. Navigationsverfahren nach Anspruch 1,
dadurch gekennzeichnet, dass
die vorbestimmten Umleitungen entlang von Autobahnen ausgeschilderte Umleitungen sind oder über Rundfunk, Fernsehen oder Telekommunikationsmedien angezeigt oder als Information geliefert werden.

3. Navigationsverfahren nach Anspruch 1 oder 2,
dadurch gekennzeichnet, dass
fünf bis fünfzehn, insbesondere zehn, vorbestimmte Umleitungen zur Auswahl angezeigt werden.

4. Navigationssystem (100) für ein Fortbewegungsmittel, insbesondere für ein Fahrzeug, Kraftfahrzeug, Schiff oder Flugzeug, zur Navigation von einem Ausgangsort zu einem Zielort, welches eine Route von dem Ausgangsort zu dem Zielort bestimmt und das Fortbewegungsmittel bzw. dessen Benutzer entlang dieser Route führt,
gekennzeichnet durch
einen Speicher (24) für vorbestimmte Umleitungen,
eine Anzeigevorrichtung (26) für vorbestimmte Umleitungen,
ein erstes manuelles Betätigungsmittel, nach dessen Betätigung das Navigationssystem (100) eine vorbestimmte Anzahl der vorbestimmten Umleitungen, welche in Fortbewegungsrichtung auf der berechneten Route voraus liegen, bestimmt und auf der Anzeigevorrichtung (26) anzeigt, und
ein zweites manuelles Betätigungsmittel, nach dessen Betätigung das Navigationssystem (100) wenigstens eine der angezeigten vorbestimmten Umleitungen in die berechnete Route integriert.

5. Navigationssystem (100) nach Anspruch 4,
dadurch gekennzeichnet, dass
dieses ein Autoradio mit CD-Laufwerk (22) umfasst, wobei der Speicher für vorbestimmte Umleitungen auf einer in dem CD-Laufwerk (22) befindlichen Navigations-CD (24) ausgebildet ist.

6. Navigationssystem (100) nach Anspruch 4 oder 5,
dadurch gekennzeichnet, dass
das erste und/oder zweite Betätigungsmittel eine Zehnertastatur (20) umfasst.
